# EUROPEAN PATENT SPECIFICATION

(11) **EP 3 818 578 B1**
(45) Date of publication and mention of the grant of the patent: **12.03.2025**
(21) Application number: 19739539.5
(22) Date of filing: 04.07.2019
(51) Int. Cl.: H01M 4/04, H01M 4/62

(54) **SILYLATED CELLULOSE BASED INTERFACIAL PROTECTIVE LAYER ON A LITHIUM SURFACE**
SILYLIERTE CELLULOSE-GRENZFLÄCHENSCHUTZSCHICHT AUF EINER METALLOBERFLÄCHE
COUCHE PROTECTRICE INTERFACIALE DE CELLULOSE SILYLÉE SUR UNE SURFACE MÉTALLIQUE

(30) Priority: 04.07.2018 EP 18181715
(43) Date of publication of application: 12.05.2021
(73) Proprietor: Kemijski Institut, 1000 Ljubljana (SI)
(72) Inventor: PAVLIN, Nejc, 5250 Solkan (SI); DOMINKO, Robert, 1262 Dol pri Ljubljani (SI)
(74) Representative: Weickmann & Weickmann PartmbB
(86) International application number: PCT/EP2019/067994
(87) International publication number: WO 2020/007980

(56) References cited:
- WO-A1-2017/151151
- CN-A- 106 654 352
- US-A- 6 025 094
- KONTTURI E ET AL: "Cellulose model surfaces-simplified preparation by spin coating and characterization by X-ray photoelectron spectroscopy, infrared spectroscopy, and atomic force microscopy", LANGMUIR, AMERICAN CHEMICAL SOCIETY, US, vol. 19, no. 14, 8 July 2003 (2003-07-08), pages 5735 - 5741, XP002348188, ISSN: 0743-7463, DOI: 10.1021/LA0340394

## Description

### RELATED APPLICATION

This application claims priority of European Patent Application No. 18 181 715.6, filed July 04, 2018.

### FIELD OF THE INVENTION

The present invention relates to electrodes, in particular anodes for use in batteries and other types of electrochemical cells, wherein a protective layer is deposited on the surface. Also disclosed are methods for forming a protective layer on an electrically conductive material and electrochemical cells including an anode with a protective layer on at least one surface. More detailed, the present invention relates to a silylated cellulose interfacial protective layer, containing lithium salt, on an electrically conductive surface and to a method for its fabrication.

### BACKGROUND OF THE INVENTION

Lithium metal batteries are among the most promising candidates for next-generation high-density energy storage devices due to unrivalled high specific capacity and the lowest reduction potential of lithium metal anode. The usage of the lithium metal anode is obstructed by at least three issues. The first issue is a dendritic deposition of lithium during charge. Lithium dendrites could penetrate trough separator membrane and cause battery cell short circuit. The second major problem of lithium metal anode is its extreme interfacial instability in liquid organic or polymer electrolytes. Lithium metal reacts with electrolyte components and thus depletes the electrolyte quantity, increase the polarization of the cell, and reduce the Coulombic efficiency and cell life. Third drawback is large volume expansion of lithium anode during deposition and stripping of lithium in the process of charge and discharge. The volume effect further aggravates interfacial stability of lithium metal towards electrolytes.

To address problems connected with poor lithium cycling behaviour in liquid organic or polymer electrolytes, researchers proposed different solutions, which most often include the formation of an interfacial or protective layer on the electrolyte facing side of the lithium metal electrode. The function of interfacial protective layer is to isolate lithium surface from the bulk electrolyte, and meanwhile, enabled conduction of lithium ions through it.

Protective layers could be prepared by in situ reaction between lithium metal anode and additive compounds in the cell's electrolyte. Majority of these in situ protective layers are grown by a controlled electrochemical reaction after the battery is assembled. Protective layers formed by in situ reaction are usually unevenly deposited on the surface of lithium metal anode. In addition, they have porous structure allowing some electrolyte to penetrate to bare lithium metal surface. Thus, they could not appropriately protect lithium metal electrode.

Lithium metal anode protection could also be achieved by ex situ formation of interfacial or protective layer from polymers, ceramics, or glasses. For example, U.S. Pat. No. 5,460,905 and U.S. Pat. No.5,462,566 (both issued to Skotheim) describes a method for protection of lithium metal anode with a film of an n-doped conjugated polymer inserted between the alkali metal anode and the electrolyte. Skotheim et al. also describe an electrically conductive crosslinked polymer film interposed between lithium anode and the electrolyte in U.S. Pat. No. 5,648,187 and U.S. Pat. No. 5,961,672. Other proposed examples for lithium metal electrode protection are described, for instance in: U.S. Pat. Nos. 5,387,479 and 5.487,959 issued to Koksbang; U.S. Pat. No. 4,917,975 issued to De Jonghe et al.; U.S. Pat. No. 5,434,021 issued to Fauteux et al.; U.S. Pat. No. 5,824,434 issued to Kawakami et al.; and U.S. Pat. No. 6,835,492 issued to Cho et al.

In US Pat. No. 6,025,094 issued to Visco et al., a single protective layer from alkali ion conducting glassy or amorphous material for alkali metal anodes was proposed, for example, for lithium-sulphur cells, to tackle the problem of short cycle life.

Although a lot of efforts were made for constructing effective interfacial protective layer for protecting lithium metal electrode from degradation, lithium metal batteries performance and safety continue to be unsatisfactory. Thus, before commercialization of lithium metal batteries pertinent protective layer must to be developed.

### SUMMARY OF THE INVENTION

In the present invention, it was found that common electrode materials can successfully be protected by a layer comprising or consisting of silylated cellulose deposited on the surface. It was further discovered, that addition of ion conductive additive in silylated cellulose protective layer additionally enhance ionic conductivity of protective layer, and in that way improve the battery performance. The protective layer on the surface of the electrode main body prevents contact between the electrically conductive material of the electrode main body and the electrolyte, and in that way enhances the interface stability of the electrode.

Thus, according to a first aspect, the invention provides an anode comprising a main body comprising or consisting of an electrically conductive material, and a protective layer disposed on at least one surface of the main body, wherein the electrically conductive material of the anode main body may be selected from lithium metal, a lithium metal alloy and graphite, wherein the protective layer comprises or consists of silylated cellulose optionally including at least one ion conductive additive.

It was found that with a layer comprising or consisting of silylated cellulose, or else, comprising or consisting of silylated cellulose including at least one ion conductive additive, even electrodes comprising or consisting of lithium metal or a lithium metal alloy can be protected. For electrode materials comprising or consisting of lithium or a lithium alloy, it was found that a protective layer of silylated cellulose optionally including at least one ion conductive additive deposited on the surface is capable of suppressing dendritic growth of lithium and extensive degradation of lithium. Thus, according to an embodiment of the invention, the electrically conductive material of the anode main body is selected from lithium metal and a lithium metal alloy. For example, the electrode main body can be a lithium foil having a thickness of not more than 1000 µm, preferably not more than 500 µm. Additionally, the protective layer of silylated cellulose or of silylated cellulose including at least one ion conductive additive is suitable for all common electrode materials such as, for example, graphite.

For a good functionality, the protective layer preferably possesses high ionic conductivity, but at the same time, it is impermeable for other battery cell components. Preferably, the protective layer has a thickness in a range of 5 nm - 5 µm, more preferably 500 nm - 4 µm, and even more preferably 1 µm - 3 µm. Alternatively, the protective layer can have a thickness in a range of 10 nm to 1 µm or 100 nm to 500 nm.

Silylated cellulose (also named silyl cellulose) for use in a protective layer of the present invention can in principle be any reaction product of cellulose with a silylating agent. In silylated cellulose, one or more hydroxy groups of the glucose units forming cellulose are substituted with a silyl group. In principle, up to three hydroxy groups can be substituted. According to the present invention, the silylated cellulose preferably comprises 0.5-3 silyl groups per glucose unit in the cellulose. More preferred are 2-3 silyl groups per glucose unit. The silyl groups can be the same or different groups -SiR₃ wherein each R can be the same or different. Preferred residues R are selected from the group consisting of alkyl, cyclo alkyl, alkenyl, alkoxy, aryl, and alkyl aryl. Especially preferred are alkyl residues, in particular C1-4 alkyl.

The silylated cellulose can be derived from microfibrillated or nanofibrillated celluloses, microcrystalline or nanocrystalline celluloses or bacterial celluloses. Preferred are microcrystalline celluloses.

The at least one ion conductive additive may in particular be a lithium salt, preferably a lithium salt selected from the group consisting of LiNO₃ (lithium nitrate), LiBF₄ (lithium tetrafluoroborate), LiClO₄ (lithium perchlorate), LiPF₆ (lithium hexafluorophosphate), LiSCN (lithium thiocyanate hydrate), LiTf (lithium trifluoromethanesulfonate), LiTFSI (lithium bis(trifluoromethane)sulfonimide), LiFSI (lithium bis(fluorosulfonyl)imide), LiB(CN)₄ (lithium tetracyanoborate), LiBOB (lithium bis(oxalato)borate), LiDCTA (lithium 4,5-dicyano-1,2,3-triazolate) and LiTDI (lithium 2-trifluoromethyl-4,5-dicyanoimidazole), most preferably LiNO₃.

In agreement with previously mentioned properties of the protective layer, the present invention furthermore provides an electrochemical cell with improved cycling properties and enhanced cell life. Thus, another aspect of the invention is an electrochemical cell comprising an anode, a cathode, a separator interposed between the anode and the cathode and an electrolyte, wherein the anode is as defined herein with the protective layer positioned on the electrolyte facing side of the anode.

In a particularly preferred embodiment, the electrochemical cell is a lithium secondary battery. Mentioned lithium metal battery having a cathode, a separator soaked with an electrolyte, and a lithium metal anode with a protective layer placed between lithium metal anode and separator soaked with electrolyte.

The electrochemical cell of the present invention may further comprise a negative current collector on the opposite side of the anode facing away from the electrolyte and/or a positive current collector on the side of the cathode facing away from the electrolyte, wherein the current collectors are made of an electrically conductive material inert to the material of the anode and cathode, respectively. The negative current collector may for example comprise a metal foil, a metal mesh or metal strip, wherein the metal may for example be nickel, copper or stainless steel. The positive current collector may for example comprise a carbon-coated aluminium foil or mesh.

As the cathode, in principle any common materials can be used. For example, the cathode may comprise a lithium intercalation compound, sulphur and/or a redox active organic compound, either as a single phase material or as a mixed material, such as mixed with carbon or other electrically conducting compounds and with binder.

The separator may in principle be made of any common material suitable to separate the anode compartment and the cathode compartment. For example, the separator may comprise a porous membrane soaked with the electrolyte. As the electrolyte, for example a polar solvent with a lithium salt dissolved therein can be used. However, any other electrolyte materials are suitable as well.

A further aspect of the present invention is a method for coating a surface of an electrically conductive material which is selected from lithium metal, a lithium metal alloy and graphite, with silylated cellulose or else, with silylated cellulose including at least one ion conductive additive. The method comprises:
(i) cleaning the surface of the electrically conductive material from any native passivation layer and impurities,
(ii) optionally smoothening the cleaned surface,
(iii) depositing a solution of silylated cellulose or else, a solution of silylated cellulose including at least one ion conductive additive on the surface, and
(iv) evaporating the solvent.

Before forming a protective layer, the surface of the electrically conductive material (e.g. lithium metal) is desirably activated. For that purpose, the surface is cleaned in step (i) from any passivation layer and impurities. Activation increases reactivity of the surface, and in this way, enhances adhesion between the electrically conductive material and the silylated cellulose, or else, the silylated cellulose including at least one ion conductive additive protective layer. Activation could be executed with extrusion from ingot or with mechanical scratching of the surface.

The cleaning step can be followed by an optional smoothening of the surface in step (ii), for example by rolling with a roller to align the surface. Especially in case of highly reactive electrically conductive materials such as lithium or lithium alloys, the surface has to be activated and cleaned of native passive layer and impurities, and finally smoothened, so that the protective layer is well attached.

In subsequent step (iii), a solution of silylated cellulose or else, a solution of silylated cellulose including at least one ion conductive additive is deposited on the cleaned and optionally smoothened surface. Therefore, silylated cellulose or else, silylated cellulose and at least one ion conductive additive is dissolved in an appropriate solvent, and the surface is contacted with this solution.

Finally, in step (iv), the solvent is evaporated.

Coating of silylated cellulose or else, silylated cellulose including at least one ion conductive additive solution could be achieved with different techniques including solution casting, spray coating, spin coating, dip coating or by using Langmuir-Blodgett coating technique. The selection of the coating technique is in the greatest extent governed by desirable thickness of the protective layer, and with the size of the surface area desired to be coated. Regarding thickness, protective layer should be as thin as possible while still effectively protecting the lithium metal electrode. Thickness of the layer will influence the flexibility and ionic conductivity of the interfacial protective layer. A high quality protective layer should be smooth and continuous and free of pores or defects that could provide a pathway for deleterious agents from the electrolyte.

A further aspect of the present invention is the use of silylated cellulose or else, silylated cellulose including at least one ion conductive additive as a protective layer on a surface of an electrically conductive material, which is selected from lithium metal, a lithium metal alloy and graphite, in particular a surface of an anode. The electrically conductive material is as defined herein. Silylated cellulose or else, silylated cellulose including at least one ion conductive additive is particularly suitable as protective layer on lithium metal, lithium metal alloy or graphite.

These and other features of the will be further described and exemplified in the detailed description of the invention below.

### BRIEF DESCRIPTION OF THE FIGURES

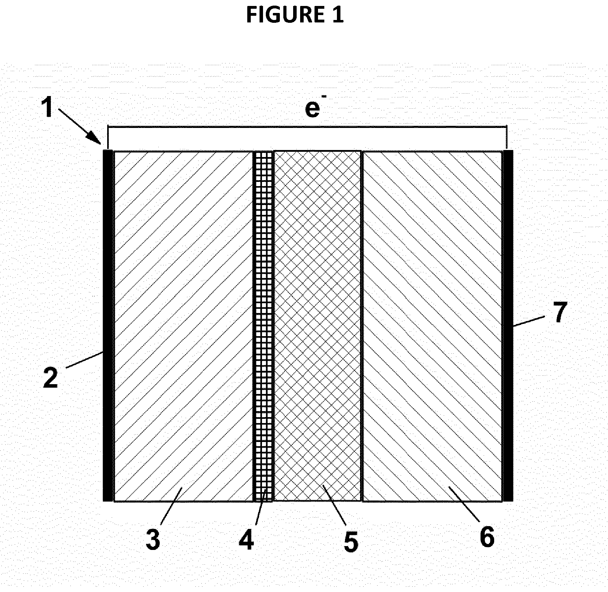

- **FIG. 1**: is a schematic illustration of cross-section of a lithium metal battery cell having a lithium metal anode interfacial protective layer.

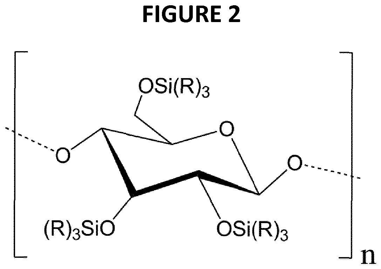

- **FIG. 2**: is a schematic illustration of repeated silylated anhydroglucose unit in cellulose molecule in accordance with the present invention.

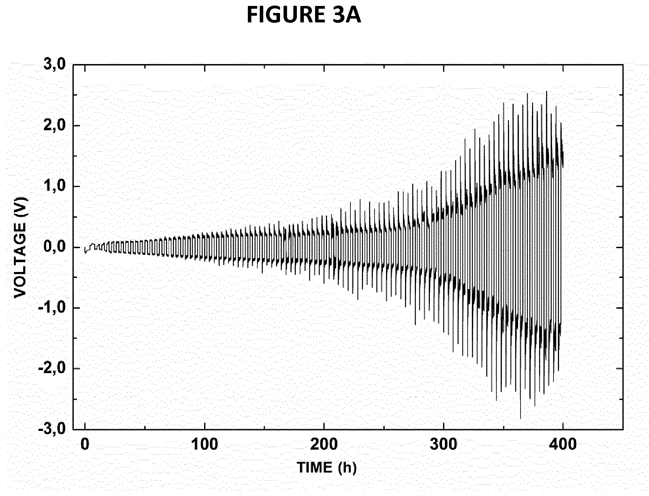

- **FIG. 3A**: illustrates a graph showing fluctuation of charge / discharge potential in the dependence of time for the lithium metal battery (Li / separator soaked with electrolyte / Li) without the lithium anode interfacial protective layer, manufactured according to **Example 9** described below.

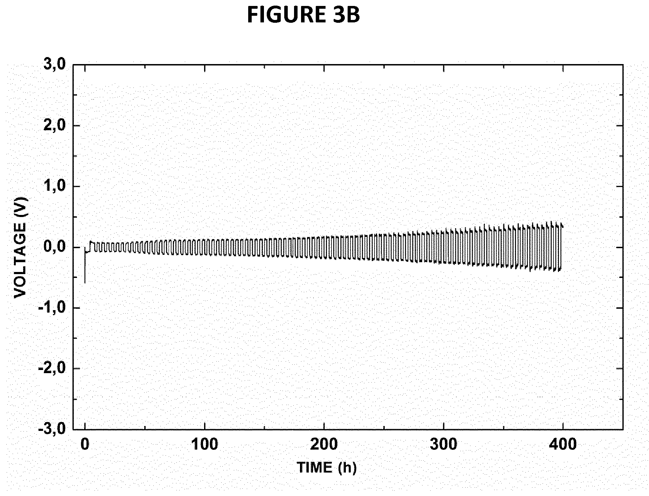

- **FIG. 3B**: illustrates a graph showing fluctuation of charge / discharge potential in the dependence of time for the lithium metal battery (Li / silylated cellulose interfacial protective layer/ separator soaked with electrolyte / silylated cellulose interfacial protective layer/ Li) having the lithium anode interfacial protective layer, manufactured according to **Example 4** described below. The thickness of interfacial protective layer was approximately 400 nm.

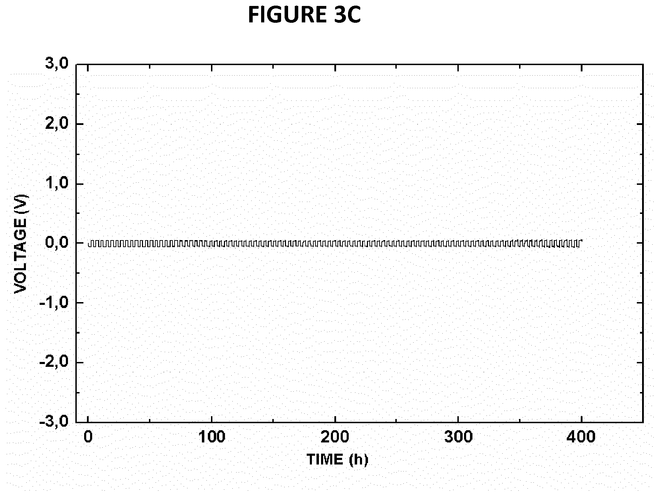

- **FIG. 3C**: illustrates a graph showing fluctuation of charge / discharge potential in the dependence of time for the lithium metal battery (Li / silylated cellulose including ion conductive additive interfacial protective layer/ separator soaked with electrolyte / silylated cellulose including ion conductive additive interfacial protective layer/ Li) having the lithium anode interfacial protective layer, manufactured according to **Example 6** described below. The thickness of interfacial protective layer was approximately 3 µm.

### DETAILED DESCRIPTION OF THE INVENTION

In the following, the use of a protective layer made from silylated cellulose or else, silylated cellulose including at least one ion conductive additive on a lithium metal electrode is described in more detail. However, it is understood that in a similar way, any other electrically conductive material can be treated and the same advantages can be achieved. In particular, the protective layer of the present invention is also suitable for being used on lithium alloys and graphite. Yet, the present invention is not limited to these materials, but can be used with any other electrically conductive materials, preferably with redox active materials.

In agreement with present invention, lithium metal electrode is modified with thin, ion conductive interfacial protective layer. This protective layer could prevent the formation of lithium dendrites or high surface area lithium on prolonged cycling of the battery. In the following description, the invention is described in detail in terms of using different silylated cellulosic materials, different ion conductive additives, different coating procedures, and processes to help explain how it may be practiced. The invention is not limited to these specific embodiments.

Figure 1 illustrates a cross-section of lithium metal battery cell 1 of the present invention. The cell includes a negative current collector **2,** which could be made of any electronically conductive material, for example, a metal foil such as a nickel foil, copper foil, and stainless foil, preferably copper foil. It is important that negative current collector is inert towards negative electrode **3.**

Lithium metal anode **3,** attached to negative current collector **2,** is made from lithium foil, and includes interfacial protective layer **4** on the electrolyte facing side of lithium metal anode, opposite from negative current collector. Lithium metal anode should not be thicker than 1000 µm, more preferably no thicker than 500 µm.

Region **5** represents battery separator soaked with liquid electrolyte medium. Separator, in the context of the present invention, is a highly porous membrane, which prevents an electronic contact between positive and negative electrode, and it is typically made from polyolefins or glassy fibres. Separator should not be thicker than 300 µm, more preferably no thicker than 100 µm. In preferred embodiments of the present invention, the electrolyte medium comprises of a polar solvent with different amounts of dissolved lithium salt. Lithium salt is selected from the group consisting of LiBF₄ (lithium tetrafluoroborate), LiClO₄ (lithium perchlorate), LiPF₆ (lithium hexafluorophosphate), LiNO₃ (lithium nitrate), LiSCN (lithium thiocyanate hydrate), LiTf (lithium trifluoromethanesulfonate), LiTFSI (lithium bis(trifluoromethane)sulfonimide), LiFSI (lithium bis(fluorosulfonyl)imide), LiB(CN)₄ (lithium tetracyanoborate), LiBOB (lithium bis(oxalato)borate), LiDCTA (lithium 4,5-dicyano-1,2,3-triazolate) or LiTDI (lithium 2-trifluoromethyl-4,5-dicyanoimidazole). Concentration of lithium salt may vary from 0.2 to 2.0 M. The solvent may be from the family of carbonates (dimethyl carbonate, diethyl carbonate, etil carbonate, propylene carbonate, ethylmethyl carbonate), ethers (dioxolane, 1,2-dimethoxyethane, tetrahydrofuran, monoglyme, diglyme, triglyme, tetraglyme), sulphones (ethylmethyl sulphone, sulpholane, methyl isopropyl sulphone), and/or ionic liquids (Cations: *N*,*N*-diethyl-*N*-methyl-*N*-(2-methoxyethyl) ammonium [DEME]⁺, *N*-methyl-*N*-alkyl-pyrrolidinium [Cₙmpry]⁺, *N*-methyl-*N*-alkyl-piperidinium [Cₙmpip]⁺, 1,2-dialkyl methylimidazolium [CₙCₙmim]⁺; Anions: bis(fluorosulfonyl)imide [FSI], bis(trifluoromethane)sulfonimide [TFSI]⁻, tetrafluoroborate [BF₄]⁻, Dicyanamide [dca]⁻). Alkyl group is typically ethyl, propyl or butyl. Preferably, lithium does not react with electrolyte medium of the present invention.

A positive electrode **6** is in the contact with a separator membrane **5,** opposite from negative lithium anode **3.** Positive electrode may be attached to the positive current collector **7** directly by using slurry casting method or by pressing self-standing positive electrode on the current collector. Positive current collector may be constituted from any electronically conductive material, preferable from carbon coated aluminium foil. Positive electrode may be comprised of any lithium intercalation compounds, sulphur or any polymeric organic compounds, either as a single phase material or mixed with a carbon or any other conducting compounds.

Figure 2 represents schematic illustration of repeated silylated anhydroglucose unit in cellulose molecule in accordance with the present invention. Cellulose is an organic compound consisting of a linear chain of β (1→4) linked D-glucose units. Cellulose-based materials are well known and show promise for a variety of potential applications.

Chemical modification of cellulose to produce a silylated cellulose material is generally known (Heinze et al. 2010: "Pure Cellulose Nanoparticles from Trimethylsilyl Cellulose", 294-II, 96-106). The use of such silylated cellulose materials as an interfacial protective layer for lithium metal batteries is not conceptualised yet.

Silylated cellulose, in the context of the present invention, shall be understood as being the product of a reaction of cellulose with a silylating agent, e. g., 1,1,1,3,3,3-hexamethyldisilazane, in the presence of a small amount of catalyst, e. g., trimethylcloro silane. Silylation must be understood as the introduction of a silyl group (R₃Si-), with different substituents, to a molecule to form silyl ethers. A substituent, in the context of the present invention, is any chemical group attached to the silicon atom. One aspect of the present invention relates to silylated cellulose having a structure: CELL[-SiR₃]ₙ, wherein: CELL is cellulose; each R is selected from the group consisting of alkyl, alkenyl, alkoxy, aryl, alkylaryl, and cycloalkyl; preferable alkyl; and n is a degree of substitution ranging from 0 to 3. Degree of substitution is the number of cellulose hydroxy (-OH) protons, which are exchanged with silyl group in reaction of silylation. In the context of present invention, degree of substitution could range from 0.5 to 3, more preferable from 2 to 3. Degree of substitution has an influence on structural properties of prepared silyl cellulose and is also connected with its solubility. Degrees of substitution could be manipulated with changing molar ratio between cellulose and silylazing agent, with changing reaction condition (temperature, cellulose solvent), or with a different starting cellulose material.

In the context of present invention, the reaction temperature may be varied from 20 to 150 °C, most preferable 90 to 110 °C. The choice of the reaction temperature will depend on desirable structural properties and/or on desirable degree of substitution.

The choice of the cellulose solvent depends on selected start cellulose material. Cellulose could be dissolved using different non-derivatizing solvents, for example: organic solvents in the presence of an inorganic salt, ionic liquids, amine oxides, aqueous alkali solutions, aqueous complex solution, and inorganic molten salt hydrates, most preferable 8 % LiCl in N,N-dimethylacetamide (DMAc). The solvent choice can influence the silylation reaction mechanism, and the stability of cellulose solution in terms of degradation of cellulose fibres.

The assortment of starting cellulose material for silylation is dependent on wanted structural and morphological properties of silylated cellulose and, at the end, on the character of the final interfacial protective layer. The first criterion for the selection of the starting cellulose material is solubility in a proper cellulose solvent. A second criterion is related to the desired molecular mass of cellulose material, which influences the arrangement of cellulose fibres in interfacial protective layer. Selection of started material also influences the degree of substitution of cellulose material. In the context of the present invention, starting cellulose material is selected from the group consisting of microfibrillated or nanofibrillated celluloses, microcrystalline or nanocrystalline celluloses, or bacterial celluloses, most preferable from the group consisting of microcrystalline celluloses.

The silylated cellulose or else, silylated cellulose including at least one ion conductive additive-containing interfacial protective layer may be formed using a silylated cellulose solution or else, silylated cellulose including at least one ion conductive additive solution prepared by dissolving silylated cellulose or else, silylated cellulose and ion conductive additive(s) in an appropriate solvent. The silylated cellulose or else, silylated cellulose including ion conductive additive(s) may be processed in film form by solvent casting, spraying, dipping or spin-coating, on the activated surface of the lithium metal.

The choice of suitable solvent is conditioned by inertia of the solvent against lithium metal. Reaction between lithium metal and solvent may lead to formation of an additional layer, which can increase polarization of the battery cell. Another criterion for the choice of suitable solvent is solubility of the desired ion conductive additive in selected solvent. Ion conductive additive(s) must be soluble in wide concentration range. In the context of present invention, solvents could be tetrahydrofuran, dimethyl sulfoxide or propylene carbonate, most preferable tetrahydrofuran.

According to the present invention, the choice of the ion conductive additive(s) depends on:
(i) the solubility of the selected ion conductive additive(s) in silyl cellulose solvent,
(ii) desired solid electrolyte interface which is formed on the surface of the lithium metal anode during the reaction of the lithium metal with the ion conductive additive,
(iii) the compatibility of the ion conductive additive(s) (e.g. lithium salt) with silyl cellulose, silyl cellulose solvent, and lithium metal,
(iv) the desired ionic conductivity of the protective layer.

In preferred embodiments of the present invention, suitable ion conductive additive is a lithium salt, preferably a lithium salt selected from the group consisting of LiNO₃ (lithium nitrate), LiBF₄ (lithium tetrafluoroborate), LiClO₄ (lithium perchlorate), LiPF₆ (lithium hexafluorophosphate), LiSCN (lithium thiocyanate hydrate), LiTf (lithium trifluoromethanesulfonate), LiTFSI (lithium bis(trifluoromethane)sulfonimide), LiFSI (lithium bis(fluorosulfonyl)imide), LiB(CN)₄ (lithium tetracyanoborate), LiBOB (lithium bis(oxalato)borate), LiDCTA (lithium 4,5-dicyano-1,2,3-triazolate) and LiTDI (lithium 2-trifluoromethyl-4,5-dicyanoimidazole), most preferably LiNO₃.

For many interfacial protective layers, the optimal thickness will range between about 5 nm and 5 µm. More preferable, the thickness will range between about 500 nm and 4 µm. Even more preferable, the thickness will range between about 1 µm and 3 µm. Alternatively, the thickness can be in a range of 10 nm to 1 µm or 100 nm to 500 nm.

### Examples

### Example 1: Synthesis of trimethylsilyl cellulose from microcrystalline cellulose (according to a procedure published in Heinze et al. Macromol. Symp. 2010, 294-II, 96-106)

Trimethylsilyl cellulose is synthesised according to the following reaction:

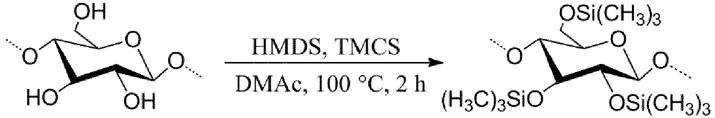

To a 100 mL round-bottom flask filled with 50 mL of N,N-dimethylacetamide 1 g of microcrystalline cellulose (MCC) was added with good agitation. Then reaction mixture was refluxed for 2 h at 150 °C to activate MCC prior to dissolution. After the slurry was allowed to cool to 100 °C, 3.5 g of anhydrous LiCl were added. The MCC dissolved completely during cooling to room temperature under constant stirring.

To a solution of cellulose in DMAc/LiCl, 6 g of HMDS and 0.17 g of TMCS were added. After the refluxing 2 h at 100 °C, the mixture was cooled to room temperature and the product was isolated by precipitation in methanol (200 mL). After filtration, the product was recrystallized from tetrahydrofuran and washed with methanol. Product was finally dried under vacuum at 80 °C yielding pure trimethylsilyl cellulose. Degree of substitution was 2.89.

### Example 2: Synthesis of trimethylsilyl cellulose from microcrystalline cellulose with lower degree of substitution (according to a procedure published in Heinze et al. Macromol. Symp. 2010, 294-11, 96-106)

To a 100 mL round-bottom flask filled with 50 mL of N,N-dimethylacetamide 1 g of microcrystalline cellulose (MCC) was added with good agitation. The reaction mixture was then refluxed for 2 h at 150 °C to activate MCC prior dissolution. After the slurry was allowed to cool to 100 °C, 3.5 g of LiCl were added. The MCC dissolved completely during cooling to room temperature under constant stirring.

To a solution of cellulose in DMAc/LiCl, 0.75 g of HMDS and 0.17 g of TMCS were added. After the refluxing 2 h at 100 °C, the mixture was cooled to room temperature and the product was isolated by precipitation in methanol (200 mL). After filtration, the product was recrystallized from dimethyl sulfoxide and washed with methanol. Product was finally dried under vacuum at 80 °C yielding pure trimethylsilyl cellulose. Degree of substitution was 0.51.

### Example 3: Synthesis of trimethylsilyl cellulose from nano-fibrillated cellulose fibres

To a 50 mL plastic centrifuge flask, 33 g of nano-fibrillated cellulose (NFC) hydrogel (w_{cellulose} = 0.03) were added. Then solvent exchange from water to DMAc was made by repeated washing and centrifuging of NFC. The procedure was repeated at least 5 times. So prepared NFC was then added to a 100 mL round-bottom flask filled with 50 mL of N,N-dimethylacetamide with good agitation. Then reaction mixture was refluxed for 2 h at 150 °C to activate NFC prior to dissolution. After the slurry was allowed to cool to 100 °C, 3.5 g of LiCl were added. The NFC dissolved completely during cooling to room temperature under constant stirring.

To a solution of cellulose in DMAc/LiCl, 6 g of HMDS and 0.17 g of TMCS were added. After refluxing for 2 h at 100 °C, the mixture was cooled to room temperature and the product was isolated by precipitation in methanol (200 mL). After filtration, the product was recrystallized from tetrahydrofuran and washed with methanol. Product was finally dried under vacuum at 80 °C yielding pure trimethylsilyl cellulose. Degree of substitution was 2.81.

### Example 4: Preparation of trimethylsilyl cellulose coatings on the surface lithium metal anode using solution casting technique

All the coatings were prepared in an argon filled dry-box. Prior to coating, lithium metal was activated and cleaned of native passive film and impurities with mechanical scratching followed with rolling to achieve smooth surface of the electrode. Then a trimethylsilyl cellulose (TMSC) was dissolved in THF by agitation. The TMSC solution was cast on the activated surface of lithium metal and the solvent was left to evaporate at room temperature. The thickness of the interfacial protective layer was controlled with the amount and/or concentration of casted solution. In that way, the thicknesses of prepared interfacial protective layers ranged from 50 nm to 2 µm.

### Example 5: Preparation of trimethylsilyl cellulose coatings on the surface lithium metal anode using spin-coating technique

All the coatings were prepared in an argon filled dry-box. Prior to coating, lithium metal was activated and cleaned of native passive layer and impurities with mechanical scratching followed with rolling to achieve a smooth surface of the anode. Then a trimethylsilyl cellulose (TMSC) was dissolved in THF by agitation. In respect of wanted thickness of interfacial protective layer, different amounts of TMSC solution were spin coated on the lithium metal surface. Thickness of interfacial protective layer could also be controlled with concentration of the TMSC solution, and with spinning speed. Protective layer thicknesses, using spin-coating technique, varied from 50 nm to 500 nm.

### Example 6: Preparation of trimethylsilyl cellulose including ion conductive additive coatings on the surface lithium metal anode using solution casting technique

All the coatings were prepared in an argon filled dry-box. Prior to coating, lithium metal was activated and cleaned of native passive film and impurities with mechanical scratching followed with rolling to achieve smooth surface of the electrode. Then a trimethylsilyl cellulose and ion conductive additive (TMSC-ICA) was dissolved in THF by agitation. The TMSC-ICA solution was cast on the activated surface of lithium metal and the solvent was left to evaporate at room temperature. The thickness of the interfacial protective layer was controlled with the amount and/or concentration of casted solution. In that way, the thicknesses of prepared interfacial protective layers ranged from 500 nm to 4 µm.

### Example 7: Preparation of trimethylsilyl cellulose including ion conductive additive coatings on the surface lithium metal anode using spin-coating technique

All the coatings were prepared in an argon filled dry-box. Prior to coating, lithium metal was activated and cleaned of native passive layer and impurities with mechanical scratching followed with rolling to achieve a smooth surface of the anode. Then a trimethylsilyl cellulose and ion conductive additive (TMSC-ICA) was dissolved in THF by agitation. In respect of wanted thickness of interfacial protective layer, different amounts of TMSC-ICA solution were spin coated on the lithium metal surface. Thickness of interfacial protective layer could also be controlled with concentration of the TMSC solution, and with spinning speed. Protective layer thicknesses, using spin-coating technique, varied from 500 nm to 1 µm.

### Example 8: Electrochemical characterization of interfacial protective layers for lithium metal anode

To evaluate electrochemical properties of interfacial protective layer for lithium metal anode, lithium metal symmetrical cell were assembled. An electrolytic solution including tetraglyme and dioxolane in a 1:1 volume ratio in which 1 M LiTFSI had been dissolved was used. Lithium metal symmetrical cells were activated in the first cycle by stripping and deposition with a current density of 0.5 mA cm⁻² for 4 h corresponding to an aerial capacity of 2 mAh cm⁻² and followed by stripping and deposition with a current density of 0.5 mA cm⁻² for 2 h corresponding to an aerial capacity of 1 mAh cm⁻².

### Example 9: Comparative example

To form a lithium metal electrochemical cell, Li, interfacial protective layer, separator soaked with electrolyte, interfacial protective layer and Li were sequentially stacked together. Li, separator soaked with electrolyte, Li cell was used for comparison and was manufactured in the same manner as the cell described above, except that no TMSC or TMSC-ICA protective layer was formed on the lithium metal anode surface.

Figure 3A shows fluctuation of charge/discharge potential in the dependence of time for lithium metal symmetrical cell without interfacial protective layer on the surface of lithium metal. The battery without protection of lithium metal shows stable cycling up to 300 h with slow increase of charge/discharge potential. After 300 h, the polarization of cell starts to rapidly increase due to formation of lithium dendrites and mossy lithium.

Figure 3B show fluctuation of charge/discharge potential in the dependence of time for lithium metal symmetrical cell with 300 nm thick interfacial protective layer. The lithium metal electrochemical cell with interfacial protective layer consisting of silylated cellulose shows very stable charge/discharge potential.

Figure 3C show fluctuation of charge/discharge potential in the dependence of time for lithium metal symmetrical cell with 3 µm thick interfacial protective layer. The lithium metal electrochemical cell with interfacial protective layer consisting of silylated cellulose including LiNO₃ as ion conductive additive shows very lower charge/discharge potential in comparison with silylated cellulose interfacial protective layer.

## Claims

1. Anode, comprising a main body comprising or consisting of an electrically conductive material, and a protective layer disposed on at least one surface of the main body, wherein the protective layer comprises or consists of silylated cellulose, and wherein the electrically conductive material of the anode main body is selected from lithium metal, a lithium metal alloy and graphite.

2. The anode of claim 1, wherein the anode main body is a lithium foil having a thickness of not more than 1000 µm, preferably not more than 500 µm.

3. The anode of any one of the preceding claims, wherein the protective layer has a thickness in a range of 5 nm to 5 µm, preferably 10 nm to 1 µm, more preferably 100 nm to 500 nm.

4. The anode of any one of the preceding claims, wherein silylated cellulose comprises 0.5 to 3 silyl groups, preferably 2 to 3 silyl groups per glucose unit in the cellulose.

5. The anode of claim 4, wherein the silyl groups are the same or different groups -SiR₃, wherein each R is independently selected from the group consisting of alkyl, cycloalkyl, alkenyl, alkoxy, aryl, and alkylaryl, preferably alkyl, in particular C₁₋₄ alkyl.

6. The anode of any one of the preceding claims, wherein the silylated cellulose is derived from microfibrillated or nanofibrillated celluloses, microcrystalline or nanocrystalline celluloses or bacterial celluloses, preferably microcrystalline celluloses.

7. Electrochemical cell, comprising an anode, a cathode, a separator interposed between the anode and the cathode and an electrolyte, wherein the anode is as defined in any one of claims 1-6, wherein the protective layer is positioned on the electrolyte facing side of the anode.

8. The electrochemical cell of claim 7, further comprising a negative current collector on the opposite side of the anode facing away from the electrolyte and/or a positive current collector on the side of the cathode facing away from the electrolyte, wherein the current collectors are made of an electrically conductive material inert to the material of the anode and cathode, respectively.

9. The electrochemical cell of claim 7 or 8, which is a lithium secondary battery.

10. Method for coating a surface of an electrically conductive material, which is selected from lithium metal, a lithium metal alloy and graphite, in particular a surface of an electrode with silylated cellulose, the method comprising:
(i) Cleaning the surface of the electrically conductive material from any native passivation layer and impurities,
(ii) Optionally smoothening the cleaned surface,
(iii) Depositing a solution of silylated cellulose on the surface, and
(iv) Evaporating the solvent.

11. The method of claim 10, wherein depositing a solution of silylated cellulose on the surface comprises solution coating, spray coating, spin coating, dip coating or Langmuir-Blodgett coating.

12. Use of silylated cellulose as a protective layer on a surface of an electrically conductive material, which is selected from lithium metal, a lithium metal alloy and graphite, in particular a surface of an anode.

## Patentansprüche

1. Anode, umfassend einen Hauptkörper, der ein elektrisch leitfähiges Material umfasst oder daraus besteht, und eine Schutzschicht, die auf mindestens einer Oberfläche des Hauptkörpers angeordnet ist, wobei die Schutzschicht silylierte Cellulose umfasst oder daraus besteht und wobei das elektrisch leitfähige Material des Anodenhauptkörpers ausgewählt ist aus Lithiummetall, einer Lithiummetalllegierung und Graphit.

2. Anode nach Anspruch 1, wobei der Anodenhauptkörper eine Lithiumfolie ist, die eine Dicke von nicht mehr als 1000 µm, vorzugsweise nicht mehr als 500 µm, aufweist.

3. Anode nach einem beliebigen der vorhergehenden Ansprüche, wobei die Schutzschicht eine Dicke in einem Bereich von 5 nm bis 5 µm, vorzugsweise 10 nm bis 1 µm, mehr bevorzugt 100 nm bis 500 nm, aufweist.

4. Anode nach einem beliebigen der vorhergehenden Ansprüche, wobei silylierte Cellulose 0,5 bis 3 Silylgruppen, vorzugsweise 2 bis 3 Silylgruppen pro Glucoseeinheit in der Cellulose umfasst.

5. Anode nach Anspruch 4, wobei die Silylgruppen die gleichen oder verschiedene Gruppen -SiR₃ sind, wobei jedes R unabhängig ausgewählt ist aus der Gruppe bestehend aus Alkyl, Cycloalkyl, Alkenyl, Alkoxy, Aryl und Alkylaryl, vorzugsweise Alkyl, insbesondere C₁₋₄-Alkyl.

6. Anode nach einem beliebigen der vorhergehenden Ansprüche, wobei die silylierte Cellulose von mikrofibrillierten oder nanofibrillierten Cellulosen, mikrokristallinen oder nanokristallinen Cellulosen oder bakteriellen Cellulosen, vorzugsweise mikrokristallinen Cellulosen, abgeleitet ist.

7. Elektrochemische Zelle, umfassend eine Anode, eine Kathode, einen Separator, der zwischen der Anode und der Kathode angeordnet ist und einen Elektrolyten, wobei die Anode wie in einem beliebigen der Ansprüche 1 - 6 definiert ist, wobei die Schutzschicht auf der dem Elektrolyten zugewandten Seite der Anode angeordnet ist.

8. Elektrochemische Zelle nach Anspruch 7, ferner umfassend einen negativen Stromkollektor auf der dem Elektrolyten abgewandten Seite der Anode und/oder einen positiven Stromkollektor auf der dem Elektrolyten abgewandten Seite der Kathode, wobei die Stromkollektoren aus einem elektrisch leitfähigen Material bestehen, das gegenüber dem Material der Anode bzw. Kathode inert ist.

9. Elektrochemische Zelle nach Anspruch 7 oder 8, die eine Lithium-Sekundärbatterie ist.

10. Verfahren zum Beschichten einer Oberfläche eines elektrisch leitfähigen Materials, das ausgewählt ist aus Lithiummetall, einer Lithiummetalllegierung und Graphit, insbesondere einer Oberfläche einer Elektrode mit silylierter Cellulose, wobei das Verfahren umfasst:
(i) Reinigen der Oberfläche des elektrisch leitfähigen Materials von jeglicher nativen Passivierungsschicht und Verunreinigungen,
(ii) gegebenenfalls Glätten der gereinigten Oberfläche,
(iii) Aufbringen einer Lösung von silylierter Cellulose auf die Oberfläche und
(iv) Verdampfen des Lösungsmittels.

11. Verfahren nach Anspruch 10, wobei Aufbringen einer Lösung von silylierter Cellulose auf die Oberfläche ein Lösungsbeschichten, Sprühbeschichten, Schleuderbeschichten, Tauchbeschichten oder Langmuir-Blodgett-Beschichten umfasst.

12. Verwendung von silylierter Cellulose als eine Schutzschicht auf einer Oberfläche eines elektrisch leitfähigen Materials, das ausgewählt ist aus Lithiummetall, einer Lithiummetalllegierung und Graphit, insbesondere auf einer Oberfläche einer Anode.

## Revendications

1. Anode, comprenant un corps principal comprenant ou consistant en un matériau électriquement conducteur, et une couche protectrice disposée sur au moins une surface du corps principal, dans laquelle la couche protectrice comprend ou consiste en cellulose silylée, et dans laquelle le matériau électriquement conducteur du corps principal de l'anode est choisi parmi le lithium métallique, un alliage de lithium métallique et le graphite.

2. Anode selon la revendication 1, dans laquelle le corps principal de l'anode est une feuille de lithium ayant une épaisseur ne dépassant pas 1000 µm, de préférence ne dépassant pas 500 µm.

3. Anode selon l'une quelconque des revendications précédentes, dans laquelle la couche protectrice a une épaisseur dans une plage de 5 nm à 5 µm, de préférence de 10 nm à 1 µm, de préférence encore de 100 nm à 500 nm.

4. Anode selon l'une quelconque des revendications précédentes, dans laquelle la cellulose silylée comprend 0,5 à 3 groupes silyle, de préférence 2 à 3 groupes silyle par unité de glucose dans la cellulose.

5. Anode selon la revendication 4, dans laquelle les groupes silyle sont des groupes -SiR₃ identiques ou différents, dans laquelle chaque R est choisi indépendamment dans le groupe consitant en alkyle, cycloalkyle, alcényle, alcoxy, aryle et alkylaryle, de préférence alkyle, en particulier alkyle en C₁₋₄.

6. Anode selon l'une quelconque des revendications précédentes, dans laquelle la cellulose silylée est dérivée de celluloses microfibrillées ou nanofibrillées, de celluloses microcristallines ou nanocristallines ou de celluloses bactériennes, de préférence de celluloses microcristallines.

7. Cellule électrochimique, comprenant une anode, une cathode, un séparateur interposé entre l'anode et la cathode et un électrolyte, dans laquelle l'anode est telle que définie dans l'une quelconque des revendications 1 à 6, dans laquelle la couche protectrice est positionnée sur le côté de l'anode tourné vers l'électrolyte.

8. Cellule électrochimique selon la revendication 7, comprenant en outre un collecteur de courant négatif sur le côté opposé de l'anode tourné à l'opposé de l'électrolyte et/ou un collecteur de courant positif sur le côté de la cathode tourné à l'opposé de l'électrolyte, dans laquelle les collecteurs de courant sont faits d'un matériau électriquement conducteur inerte vis-à-vis du matériau de l'anode et de la cathode, respectivement.

9. Cellule électrochimique selon la revendication 7 ou 8, qui est une batterie secondaire au lithium.

10. Procédé pour revêtir une surface d'un matériau électriquement conducteur, qui est choisi parmi le lithium métallique, un alliage de lithium métallique et le graphite, en particulier une surface d'une électrode avec de la cellulose silylée, le procédé comprenant :
(i) le nettoyage de la surface du matériau électriquement conducteur pour retirer toute couche de passivation native et les impuretés,
(ii) éventuellement le lissage de la surface nettoyée,
(iii) le dépôt d'une solution de cellulose silylée sur la surface, et
(iv) l'évaporation du solvant.

11. Procédé selon la revendication 10, dans lequel le dépôt d'une solution de cellulose silylée sur la surface comprend le revêtement par solution, le revêtement par pulvérisation, le revêtement par centrifugation, le revêtement par immersion ou le revêtement de Langmuir-Blodgett.

12. Utilisation de cellulose silylée comme couche protectrice sur une surface d'un matériau électriquement conducteur, qui est choisi parmi le lithium métallique, un alliage de lithium métallique et le graphite, en particulier une surface d'une anode.
